# EUROPEAN PATENT APPLICATION

(11) **EP 4 530 688 A1**
(43) Date of publication of application: **02.04.2025**
(21) Application number: 24198814.6
(22) Date of filing: 06.09.2024
(51) Int. Cl.: G02B 6/125, G02B 6/28

(54) **DIRECTIONAL COUPLER WITH REDUCED PHASE DISTORTION**

(30) Priority: 27.09.2023 US 202318475503
(71) Applicant: Honeywell International Inc., Charlotte, NC 28202 (US)
(72) Inventor: PUCKETT, Matthew Wade, Charlotte, 28202 (US); WU, Jianfeng, Charlotte, 28202 (US); QIU, Tiequn, Charlotte, 28202 (US); TIN, Steven, Charlotte, 28202 (US)
(74) Representative: Haseltine Lake Kempner LLP

(57) **Abstract**

A directional coupler with reduced phase deviation is provided. The directional coupler includes a first coupler waveguide and second coupler waveguide. At least one of a spaced distance between the first coupler waveguide and the second coupler waveguide and a length of the first coupler waveguide and the second coupler waveguide selected to achieve an acceptable phase deviation and a set coupling ratio. The phase deviation is caused by a difference in loss coefficients between a first optical mode in the first coupler waveguide and a second optical mode in the second coupler waveguide.

## Description

### BACKGROUND

Fiber or optical directional couplers are used to transfer energy between adjacent fiber waveguides. When two waveguides are positioned sufficiently close to each other in a parallel fashion, propagation modal fields generated by light waves (signals) in a first coupler waveguide of the directional coupler overlaps into the other second coupler waveguide causing optical modes in the coupler waveguides to couple therein transferring energy from the light waves in the first waveguide to light waves in the second waveguide.

An example of a device that implements directional couplers is a gyroscope that is based on an optical resonator. An optical gyroscope may implement a first directional coupler to direct first light waves from a first laser into and out of a ring resonator in a clockwise direction and a second directional coupler to direct second light waves into and out of the ring resonator in a counterclockwise direction. A critical source of error in optical resonator gyroscopes arises from the directional couplers that direct the light waves into and out of the ring resonator. Specifically, when loss coefficients between the optical modes in the coupler waveguides of directional coupler are unequal, a phase difference between the optical modes in the coupler waveguides deviates from an ideal value. This can distort the optical resonance which is used to measure rotation. This distortion can then lead to errors in the measured rotation rate, and thus should be minimized or stabilized to the greatest extent possible.

For the reasons stated above and for other reasons stated below which will become apparent to those skilled in the art upon reading and understanding the present specification, there is a need in the art for a directional coupler with closely matching loss coefficients.

### SUMMARY

The following summary is made by way of example and not by way of limitation. It is merely provided to aid the reader in understanding some of the aspects of the subject matter described. Embodiments provide a directional coupler with reduced phase deviation.

In one embodiment, a method of designing a directional coupler with reduced phase deviation is provided. The method includes setting a coupling ratio of the directional coupler; setting a separation distance between a first coupler waveguide and a second coupler waveguide of the directional coupler; setting a length of the first coupler waveguide and the second coupler waveguide of the directional coupler; determining a phase deviation caused by a difference in loss coefficients between a first optical mode in the first coupler waveguide and a second optical mode in the second coupler waveguide; and when the determined phase deviation is not acceptable, changing at least one of the separation distance between the first coupler waveguide and the second coupler waveguide and the length of the first coupler waveguide and the second coupler waveguide until an acceptable phase deviation is reached while maintaining the set coupling ratio.

In another embodiment, a directional coupler with reduced phase deviation is provided. The directional coupler includes a first coupler waveguide and a second coupler waveguide. At least one of a spaced distance between the first coupler waveguide and the second coupler waveguide and a length of the first coupler waveguide and the second coupler waveguide is set based on an acceptable phase deviation and a set coupling ratio. The phase deviation is caused by a difference in loss coefficients between a first optical mode in the first coupler waveguide and a second optical mode in the second coupler waveguide.

In still another embodiment, a gyroscope is provided. The gyroscope includes a first laser to generate first light waves, a second laser to generate second light waves, a ring resonator, a first directional coupler, a second directional coupler, a first PDH loop, a second PDH loop, and a subtractor. The first directional coupler configured to direct the first light waves into and out of the ring resonator in a CW direction, the first directional coupler including, a first coupler waveguide and a second coupler waveguide. At least one of a spaced distance between the first coupler waveguide and the second coupler waveguide and a length of the first coupler waveguide and the second coupler waveguide selected to achieve an acceptable phase deviation of the first directional coupler and a set coupling ratio. The phase deviation of the first directional coupler is caused by a difference in loss coefficients between a first optical mode in the first coupler waveguide and a second optical mode in the second coupler waveguide. The second directional coupler is configured to direct the first light waves into and out of the ring resonator in a CCW direction. The second directional coupler includes a third coupler waveguide, and a fourth coupler waveguide. At least one of a spaced distance between the third coupler waveguide and the fourth coupler waveguide and a length of the third coupler waveguide and the fourth coupler waveguide selected to achieve an acceptable acceptable phase deviation of the second directional coupler and the set coupling ratio. The phase deviation of the second optical coupler is caused by a difference in loss coefficients between a first optical mode in the third coupler waveguide and a second optical mode in the fourth coupler waveguide. The first PDH loop couples an output of the first directional coupler to the first laser to stabilize a first frequency of the first light waves out of the first laser. The second PDH loop couples an output of the second directional coupler to the second laser to stabilize a second frequency of the second light waves out of the second laser. The subtractor is coupled to subtract the second frequency from the first frequency to provide a rate of change output.

### BRIEF DESCRIPTION OF THE DRAWINGS

The present invention can be more easily understood and further advantages and uses thereof will be more readily apparent, when considered in view of the detailed description and the following figures in which:
Figure 1 is a block diagram of an optical gyroscope including a first directional coupler and a second directional coupler according to an example aspect of the preset invention;
Figure 2A is an illustration of a first directional coupler according to an example aspect of the preset invention;
Figure 2B is an illustration of a second directional coupler according to an example aspect of the preset invention;
Figure 2C is an illustration of a third directional coupler according to an example aspect of the preset invention;
Figure 3A is a coupling ratio verses length graph according to an example aspect of the preset invention;
Figure 3B is a phase nonideality verses length graph according to an example aspect of the preset invention;
Figure 4 is a phase deviation verses coupler waveguide length and separation graph according to an example aspect of the preset invention; and
Figure 5 is a formation flow diagram illustrating a method of forming a directional coupler according to an example aspect of the preset invention.

In accordance with common practice, the various described features are not drawn to scale but are drawn to emphasize specific features relevant to the present invention. Reference characters denote like elements throughout Figures and text.

### DETAILED DESCRIPTION

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that changes may be made without departing from the spirit and scope of the present invention. The following detailed description is, therefore, not to be taken in a limiting sense, and the scope of the present invention is defined only by the claims and equivalents thereof.

Embodiments of the present invention provide a directional coupler with reduced phase distortion between optical modes in coupled waveguides that may be used for sensing applications, such as, but not limited to, a resonant optical gyroscope. In embodiments, optical loss coefficients between two optical modes in a directional coupler (a first optical mode in a first coupler waveguide and a second optical mode in a second coupler waveguide) are designed to be closely equal to each other, thereby reducing resonance distortion and consequent bias errors that may be present.

In embodiments, a desired coupling ratio value is first established for the directional coupler. Once the desired coupling ratio value is chosen, several combinations of waveguide separation and coupler length are tested or modeled until a target value is achieved. In general, a directional coupler which will yield the lowest phase distortion will be the one with a longer length and a larger separation (gap) between the coupler waveguides of the directional coupler, because this yields optical modes with almost exactly equal loss coefficients. In one example, a directional coupler with the shortest coupler waveguides that are associated with an acceptable phase distortion may be used where the length of the directional coupler is of concern.

A block diagram of an optical gyroscope 100 that includes ideal directional couplers 200-1 and 200-2 in an example is illustrated. The optical gyroscope 100 includes a first laser 102 and a second laser 106. The first laser 102 generates first laser signals (first light waves) that are directed to a first phase modulator 104. The first light waves are then directed to a first ideal coupler 200-1 through a first input waveguide 130 where the first light waves are directed into a closed looped fiber coil 110 (resonator) in a clockwise (CW) direction.

The second laser 106 generates second laser signals (second light waves) that are directed to a second phase modulator 108. The second light waves are then directed to a second ideal directional coupler 200-2 though a second input waveguide 134. The second directional coupler 200-2 directs the second light waves into the fiber coil 110 in a counterclockwise (CCW) direction.

The first light waves exit the fiber coil 110 at the first ideal directional coupler 200-1 and are directed to a first detector 105 through a first output waveguide 132. In one example, the first detector 105 includes a photodiode detector. The first detector 105 is used to interface the first light waves into first electrical output signals. The first electrical output signals from first detector 105 are then directed through a first pound-Drever-Hall (PDH) loop 112 back to the first laser 102 to stabilize the frequency of the first light waves out of the first laser 102. Further, an output of the first PDH loop 112 is coupled to a subtractor 116.

The second light waves exit the fiber coil 110 at the second ideal directional coupler 200-2 and are directed to a second detector 107 (or sensor) through a second output waveguide 136. In one example, the second detector 107 is a photodiode detector. The second detector 107 is used to interface the second light waves into second electrical output signals. The second electrical output signals from the second director are then directed through a PDH loop 114 back to the second laser 106 to stabilize the frequency of the second light waves out of the second laser 106. Further, an output of the second PDH loop 112 is coupled to subtractor 116.

The first PDH loop 112 and the second PDH loop 114 locks the respective first laser 102 and second laser 106 to resonator resonances at reflection points at the respective first directional coupler 200-1 and the second directional coupler 200-2. Rotational information provided by the optical gyroscope 100 may be determined with a processor 121 that is in communication with an output of the subtractor 116. Subtractor 116 provides processor 121 a rate of change output by subtracting the CCW resonant frequency from the CW resonance frequency.

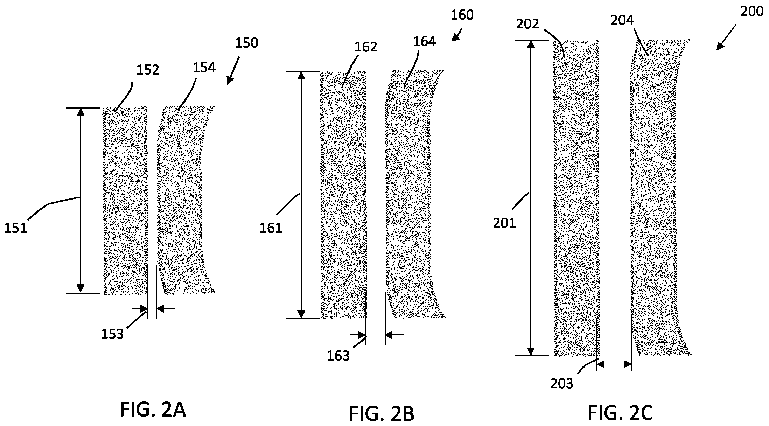

Examples of directional couplers are illustrated in Figures 2A, 2B and 2C. Directional couplers generally include two coupler waveguides that are positioned close enough to each other that some fraction of the light energy from one coupler waveguide will couple over to the other coupler waveguide. Directional couplers may be used for splitters as well as directing light waves into and out of a closed looped resonator as illustrated above in the gyroscope 100 example.

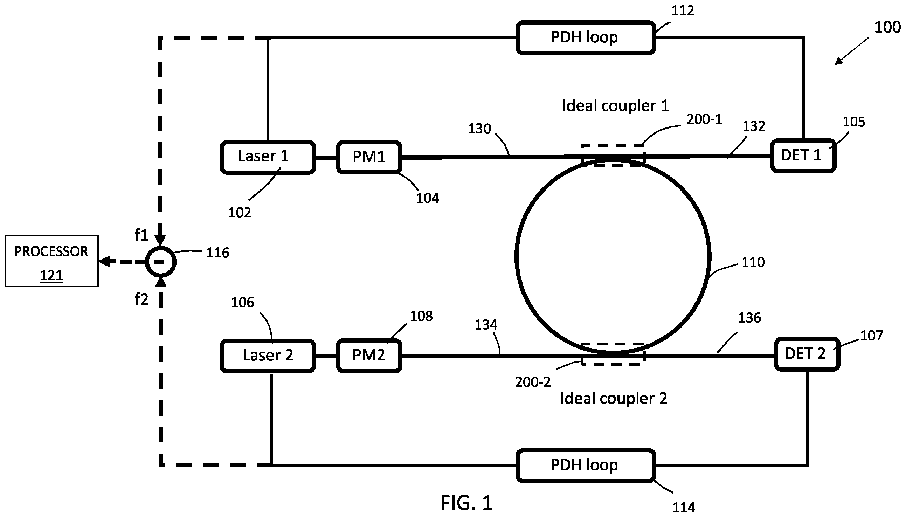

Figure 2A illustrates a first directional coupler 150 that includes a first coupler waveguide 152 and second coupler waveguide 154. The first coupler waveguide 152 and the second coupled waveguide 154 have a defined length 151. Further, there is defined separation 153 between the first coupler waveguide 152 and the second coupler waveguide 154 of the first directional coupler 150 of Figure 2A. Figure 2B illustrates a second directional coupler 160 with a first coupler waveguide 162 and a second coupler waveguide 164. The first coupler waveguide 162 and the second coupler waveguide 164 have a defined length 161. Further there is defined separation 163 between the first coupler waveguide 162 and the second coupler waveguide 164 of the second directional coupler 160 of Figure 2B. Figure 2C illustrates a third directional coupler 200 with a first coupler waveguide 202 and a second coupler waveguide 204. The first coupler waveguide 202 and the second coupler waveguide 204 have a defined length 201. Further there a defined separation 203 is between the first coupler waveguide 202 and the second coupler waveguide 204 of the third directional coupler 200 Figure 2C. The third directional coupler 200 is a generic illustration of the first directional coupler 200-1 and the second directional coupler 200-2 in the optical gyroscope of Figure 1. That is, in one example, the same directional coupler can be used for both a first directional coupler and second directional couplers in an optical gyroscope.

Ideally for a closed looped resonator, such as fiber coil 110 of Figure 1, the phase offset of the light waves coming out of the first output waveguide 132 versus second output waveguide 136, in an ideal situation with be π/2. However, the phase offset will not be exactly π/2 because loss coefficients in the optical modes in the coupler waveguides of the directional coupler will typically be unequal. The difference in loss coefficients may translate to a deviation in the phase relationship away from π/2. A slight deviation away from π/2 can lead to distortions in resonance. Distortion in residence, in turn, can lead to output errors from optical sensors that use resonance to track changes in an environment or in an inertia application.

Embodiments provide a directional coupler that provides a fixed coupling ratio that minimizes an amount of deviation away from the desired π/2 phase offset. In one example, the design of an ideal directional coupler is provided that achieves a splitting ratio where half of the input power crosses the coupler waveguides in the directional coupler.

As the separation increases between two coupler waveguides in a directional coupler, the coupling of energy gets lower. To achieve a splitting ratio that is the same as the separation increases, the coupler waveguides of the directional coupler need to increase in length. As the waveguides increase in length, a loss coefficient between the modes in the coupler waveguides of the directional coupler become more similar so the deviation, caused by the difference in the loss coefficients in the optical modes, away from π/2 becomes smaller and smaller. Hence, longer coupler waveguides in the directional coupler with larger separation provide a more ideal directional coupler that results in a closer to ideal phase offset. This is ideal for devices such as the optical gyroscope 100 discussed above.

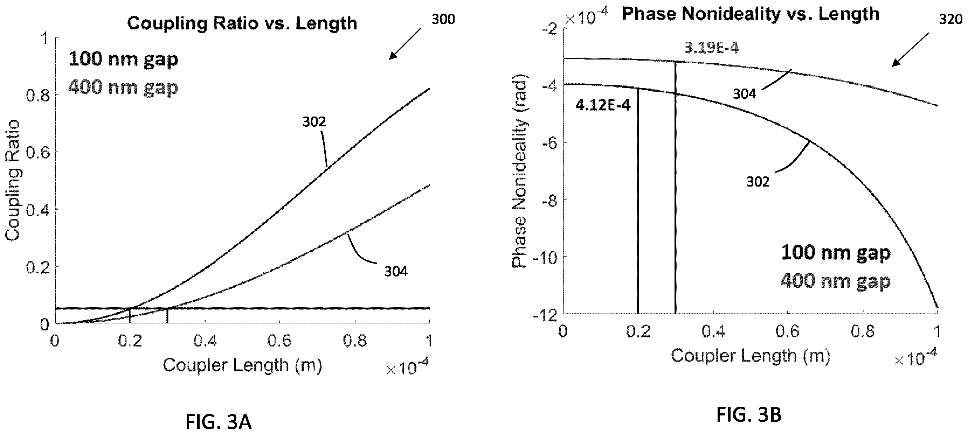

Figure 3A illustrates a coupling ratio verses length graph 300 and Figure 3B illustrates a phase nonideality verses length graph 320 of examples. The coupling ratio verses length graph 300 of Figure 3A illustrates how the coupling ratio changes based on the coupling length of the waveguides in a directional coupler with a first gap 302 (or separation) of 100nm and a second gap 304 of 400 nm. The phase nonideality verses length graph 320 of Figure 3B illustrates a how the phase nonideality changes based on the coupling length of the coupling waveguides in the directional coupler with the first gap 302 of 100nm and the second gap 340 of 400 nm. As illustrated, the phase nonideality is lessened as the coupler length is increased and a gap (separation) also has an impact on the phase nonideality.

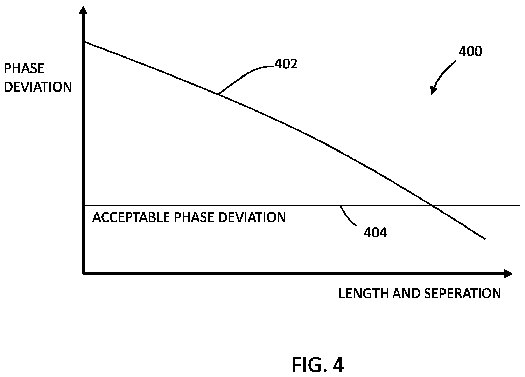

As discussed above, embodiments provide a directional coupler that reduces the nonideality which in turn makes the loss coefficient more common (equivalent) between modes in the waveguides that form the directional coupler. Figure 4 illustrates a phase deviation verses coupler waveguide length and separation graph 400 in an example. In this example, an acceptable phase deviation 404 has been set. In particular, graph 400 illustrates where a phase deviation verses length and separation curve 402 of the graph 400 reaches or is below the acceptable phase deviation 404. In an example, a length and separation distance of the coupler waveguides may be selected at the crossing of the phase deviation verse length and separation curve 402 and the acceptable deviation 404 to minimize a possible length (and/or separation) of the coupler waveguides while still achieving the acceptable phase deviation. This may be used in situations where an application of the directional coupler requires a small package.

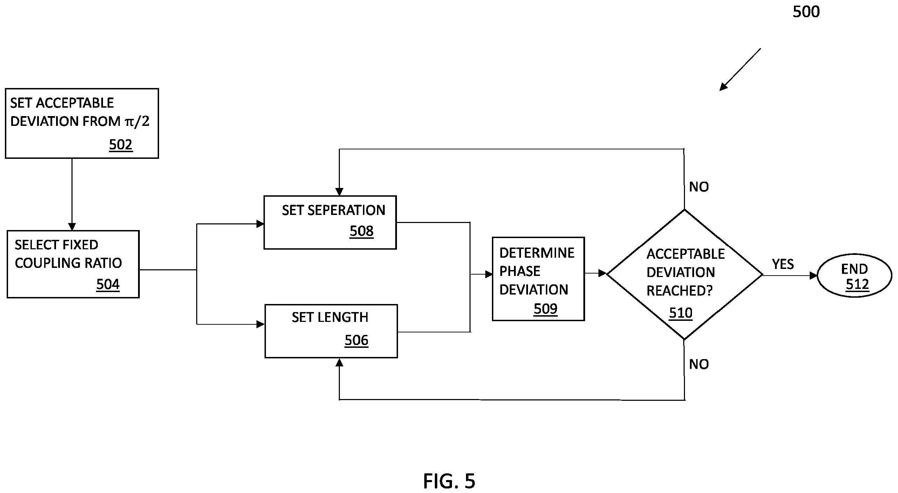

A method of forming a directional coupler is provided in the formation flow diagram 500 of Figure 5. Flow diagram 500 is provided in a series of sequential blocks. The blocks may occur in a different order or even in parallel in other examples. Hence, embodiments are not limited to sequence set out in flow diagram 500 of Figure 5.

At block 502 an acceptable amount of deviation away from π/2 is identified. The acceptable amount of deviation may be dependent on the application and desired metrics of the directional coupler. As discussed above, applications that use ring resonators such as gyroscopes and inertial reference systems may require a small amount of deviation.

A fixed coupling ratio is selected at block 504. The coupling ratio is the desired amount of energy transfer between the coupling waveguides. Here again, the fixed coupling ratio may be set based on the application of the directional coupler.

At block 508, a separation (spaced distance) between the coupler waveguides is selected and at block 506 the length of the coupler waveguides is selected. The phase deviation is determined a block 509. This process may be done by modeling or by building and measuring phase deviation. In one example, a Finite-Difference Time-Domain (FDTD) modeling system is used that determines phase deviation as a function of the waveguide separation assuming that the selected coupling ratio remains constant between the models. In one example, at least one of a maximum separation between the waveguides and a maximum length of the waveguides is applied in respective blocks 508 and 506 which may be dependent on an intended application of the directional coupler. For example, some intended applications may limit the size of the directional coupler which may be accomplished by limiting the separation and widths of the coupler waveguides.

It is then determined if the acceptable deviation has been reached at block 510. An example of modeling is further explained with reference to the first directional coupler 150 illustrated in Figure 2A, the second directional coupler 160 illustrated in Figure 2B, and the third directional coupler 200 of Figure 2C. In an example for a 0.5 percent directional coupler with 40 nm thick silicon nitride (SiN) waveguides, the modeling provides a phase deviation of .000061π for the directional coupler 150 of Figure 2A with a 2 µm separation and a 66 µm length. The modeling further provides a determined phase deviation of .000052π for directional coupler 160 of Figure 2B with a 4 µm separation and a 225 µm length. The modeling also provides a determined phase deviation of .000043π for directional coupler 200 of Figure 2C with a 6 µm separation and a 725 µm length with. Hence, in this example, directional coupler 200 of Figure 2C provides the least amount of deviation in phase.

Assuming the acceptable deviation for the application is .000043π or less, the process would end at block 512 in this example. If, in this example, the set acceptable deviation has not been reached at block 510, the process continues by varying or adjusting at least one of the separation and length of the coupler waveguides at block 506 while maintaining the set coupling ratio.

### EXAMPLE EMBODIMENTS

Example 1 is a method of designing a directional coupler with reduced phase deviation. The method includes setting a coupling ratio of the directional coupler; setting a separation distance between a first coupler waveguide and a second coupler waveguide of the directional coupler; setting a length of the first coupler waveguide and the second coupler waveguide of the directional coupler; determining a phase deviation caused by a difference in loss coefficients between a first optical mode in the first coupler waveguide and a second optical mode in the second coupler waveguide; and when the determined phase deviation is not acceptable, changing at least one of the separation distance between the first coupler waveguide and the second coupler waveguide and the length of the first coupler waveguide and the second coupler waveguide until an acceptable phase deviation is reached while maintaining the set coupling ratio.

Example 2, includes the method of Example 1, further includes setting the acceptable phase deviation.

Example 3 includes the method of any of the Examples 1-2, wherein changing one of the separation distance between the first coupler waveguide and the second coupler waveguide and the length of the first coupler waveguide and the second coupler waveguide of the directional coupler further includes decreasing the separation distance between the first coupler waveguide and the second coupler waveguide of the directional coupler when the phase deviation is more than the acceptable phase deviation.

Example 4 includes the method of any of the Examples, 1-3, wherein changing one of the separation distance between the first coupler waveguide and the second coupler waveguide and the length of the first coupler waveguide and the second coupler waveguide of the directional coupler further including increasing the length of the first coupler waveguide and the second coupler waveguide of the directional coupler when the phase deviation is more than the acceptable phase deviation.

Example 5 includes the method of any of the Examples 1-4, further including determining the acceptable phase deviation based on an intended application of the directional coupler.

Example 6 includes the method of any of the examples 1-5, further including setting at least one of a maximum distance of the separation distance between the first coupler waveguide and the second coupler waveguide and a maximum length of the first coupler waveguide and the second coupler waveguide based on an application of the directional coupler.

Example 7 includes a directional coupler with reduced phase deviation. The directional coupler includes a first coupler waveguide and a second coupler waveguide. At least one of a spaced distance between the first coupler waveguide and the second coupler waveguide and a length of the first coupler waveguide and the second coupler waveguide being selected to achieve an acceptable phase deviation and a set coupling ratio. The phase deviation is caused by a difference in loss coefficients between a first optical mode in the first coupler waveguide and a second optical mode in the second coupler waveguide.

Example 8 includes the directional coupler of Example 7, wherein the directional coupler is modeled to determine a phase deviation using at least a set fixed coupling ratio while the at least one of the spaced distance between the first coupler waveguide and the second coupler waveguide and the length of the first coupler waveguide and the second coupler waveguide is varied.

Example 9 includes the directional coupler of any of the Examples 7-8, wherein the acceptable phase deviation is selected based on an application of the directional coupler.

Example 10 includes the directional coupler of any of the Examples 7-9, wherein the difference in the loss coefficients between the first optical mode and the second optical mode in the directional coupler is set based on the at least one of the spaced distance between the first coupler waveguide and the second coupler waveguide and the length of the first coupler waveguide and the second coupler waveguide.

Example 11 includes a gyroscope including first laser to generate first light waves, a second laser to generate second light waves, a ring resonator, a first directional coupler, a second directional coupler, a first PDH loop, a second PDH loop, and a subtractor. The first directional coupler configured to direct the first light waves into and out of the ring resonator in a CW direction, the first directional coupler including, a first coupler waveguide and a second coupler waveguide. At least one of a spaced distance between the first coupler waveguide and the second coupler waveguide and a length of the first coupler waveguide and the second coupler waveguide selected to achieve an acceptable phase deviation of the first directional coupler and a set coupling ratio. The phase deviation of the first directional coupler is caused by a difference in loss coefficients between a first optical mode in the first coupler waveguide and a second optical mode in the second coupler waveguide. The second directional coupler is configured to direct the first light waves into and out of the ring resonator in a CCW direction. The second directional coupler includes a third coupler waveguide, and a fourth coupler waveguide. At least one of a spaced distance between the third coupler waveguide and the fourth coupler waveguide and a length of the third coupler waveguide and the fourth coupler waveguide selected to achieve an acceptable phase deviation of the second directional coupler and the set coupling ratio. The phase deviation of the second optical coupler is caused by a difference in loss coefficients between a first optical mode in the third coupler waveguide and a second optical mode in the fourth coupler waveguide. The first PDH loop couples an output of the first directional coupler to the first laser to stabilize a first frequency of the first light waves out of the first laser. The second PDH loop couples an output of the second directional coupler to the second laser to stabilize a second frequency of the second light waves out of the second laser. The subtractor is coupled to subtract the second frequency from the first frequency to provide a rate of change output.

Example 12 includes the gyroscope of Example 11, wherein the first directional coupler is modeled to determine a phase deviation using at least a set fixed coupling ratio while the at least one of the spaced distance between the first coupler waveguide and the second coupler waveguide and the length of the first coupler waveguide and the second coupler waveguide is varied.

Example 13 includes the gyroscope of any of the examples 11-12, wherein the second directional coupler is modeled to determine a phase deviation using at least a set fixed coupling ratio while the at least one of the spaced distance between the third coupler waveguide and the fourth coupler waveguide and the length of the third coupler waveguide and the fourth coupler waveguide is varied.

Example 14 includes the gyroscope of any of the examples 11-13, wherein the acceptable phase deviation in the first directional coupler is set based on an application of the first directional coupler in the gyroscope.

Example 15 includes the gyroscope of any of the examples 11-14, wherein the acceptable phase deviation in the second directional coupler is set based on an application of the first directional coupler in the gyroscope.

Example 16 includes the gyroscope of any of the examples 11-15, wherein the difference in the loss coefficients between the first optical mode and the second optical mode in the first directional coupler is set based on the at least one of the spaced distance between the first coupler waveguide and the second coupler waveguide and the length of the first coupler waveguide and the second coupler waveguide.

Example 17 includes the gyroscope of any of the examples 11-16, wherein the difference in the loss coefficients between the first optical mode and the second optical mode in the second directional coupler is set based on the at least one of the spaced distance between the third coupler waveguide and the fourth coupler waveguide and the length of the third coupler waveguide and the fourth coupler waveguide.

Example 18 includes the gyroscope of any of the Examples 11-17, further including a first phase modulator and as second phase modulator. The first phase modulator is coupled between an output of the first laser and the first directional coupler. The second phase modulator is coupled between an output of the second laser and the second directional coupler.

Example 19 includes the gyroscope of any of the examples 11-18, further including a first detector and a second detector. The first detector is coupled to an output of the first directional coupler to interface the first light waves into first electrical signals. The second detector is coupled to an output of the second directional coupler to interface the second light waves into second electrical signals.

Example 20 includes the gyroscope of any of the examples 11-19, further including a processor in communication with an output of the subtractor. The processor is configured to determine rotational information based on the rate of change output.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method of designing a directional coupler (200) with reduced phase deviation, the method comprising:
setting a coupling ratio of the directional coupler (200);
setting a separation distance (203) between a first coupler waveguide (202) and a second coupler waveguide (204) of the directional coupler (200);
setting a length (201) of the first coupler waveguide (202) and the second coupler waveguide (204) of the directional coupler (200);
determining a phase deviation caused by a difference in loss coefficients between a first optical mode in the first coupler waveguide (202) and a second optical mode in the second coupler waveguide (204); and
when the determined phase deviation is not acceptable, changing at least one of the separation distance (203) between the first coupler waveguide (202) and the second coupler waveguide (204) and the length (201) of the first coupler waveguide (202) and the second coupler waveguide (204) until an acceptable phase deviation is reached while maintaining the set coupling ratio.

2. The method of claim 1, further comprising:
setting the acceptable phase deviation.

3. The method of claim 1, wherein changing one of the separation distance (203) between the first coupler waveguide (202) and the second coupler waveguide (204) and the length (201) of the first coupler waveguide (202) and the second coupler waveguide (204) of the directional coupler (200) further comprises:
decreasing the separation distance (203) between the first coupler waveguide (202) and the second coupler waveguide (204) of the directional coupler (200) when the phase deviation is more than the acceptable phase deviation.

4. The method of claim 1, wherein changing one of the separation distance (203) between the first coupler waveguide (202) and the second coupler waveguide (204) and the length (201) of the first coupler waveguide (202) and the second coupler waveguide (204) of the directional coupler (200) further comprises:
increasing the length (201) the first coupler waveguide (202) and the second coupler waveguide (204) of the directional coupler (200) when the phase deviation is more than the acceptable phase deviation.

5. The method of claim 1, further comprising:
determining the acceptable phase deviation based on an intended application of the directional coupler (200).

6. The method of claim 1, further comprising:
setting at least one of a maximum distance of the separation distance (203) between the first coupler waveguide (202) and the second coupler waveguide (204) and a maximum length of the first coupler waveguide (202) and the second coupler waveguide (204) based on an application of the directional coupler (200).

7. A directional coupler (200) with reduced phase deviation, the directional coupler (200) comprising:
a first coupler waveguide (202); and
a second coupler waveguide (204), at least one of a spaced distance (203) between the first coupler waveguide (202) and the second coupler waveguide (204) and a length (201) of the first coupler waveguide (202) and the second coupler waveguide (204) being selected to achieve an acceptable phase deviation and a set coupling ratio, the phase deviation caused by a difference in loss coefficients between a first optical mode in the first coupler waveguide (202) and a second optical mode in the second coupler waveguide (204).

8. The directional coupler (200) of claim 7, wherein the directional coupler (200) is modeled to determine a phase deviation using at least a set fixed coupling ratio while the at least one of the spaced distance (203) between the first coupler waveguide (202) and the second coupler waveguide (204) and the length (201) of the first coupler waveguide (202) and the second coupler waveguide (204) is varied.

9. The directional coupler (200) of claim 7, wherein the acceptable phase deviation is selected based on an application of the directional coupler (200).

10. The directional coupler (200) of claim 7, wherein the difference in the loss coefficients between the first optical mode and the second optical mode in the directional coupler is set based on the at least one of the spaced distance (203) between the first coupler waveguide (202) and the second coupler waveguide (204) and the length (201) of the first coupler waveguide (202) and the second coupler waveguide (204).
